# EUROPÄISCHE PATENTSCHRIFT

(11) **EP 2 435 605 B1**
(45) Veröffentlichungstag und Bekanntmachung des Hinweises auf die Patenterteilung: **03.12.2014**
(21) Anmeldenummer: 10724293.5
(22) Anmeldetag: 28.05.2010
(51) Int. Cl.: H01M 8/04, C25B 1/26, C25B 1/46, C25B 15/08

(54) **VERFAHREN UND VORRICHTUNG ZUR ELEKTROLYSE EINER WÄSSERIGEN LÖSUNG VON CHLORWASSERSTOFF ODER ALKALICHLORID IN EINER ELEKTROLYSEZELLE**
PROCESS AND APPARATUS FOR THE ELECTROLYSIS OF AN AQUEOUS SOLUTION OF HYDROGEN CHLORIDE OR ALKALI CHLORIDE IN AN ELECTROLYTIC CELL
PROCÉDÉ ET DISPOSITIF D'ÉLECTROLYSE D'UNE SOLUTION AQUEUSE DE CHLORURE D'HYDROGÈNE OU DE CHLORURE ALCALIN DANS UNE CELLULE D'ÉLECTROLYSE

(30) Priorität: 30.05.2009 DE 102009023539
(43) Veröffentlichungstag der Anmeldung: 04.04.2012
(73) Patentinhaber: Messer Group GmbH, 65812 Bad Soden (DE); Messer Austria GmbH, 2352 Gumpoldskirchen (AT); Bayer Intellectual Property GmbH, 40789 Monheim (DE)
(72) Erfinder: BACHLEITNER, Walter, A-4600 Wels (AT); ERDMANN, Christoph, 65719 Hofheim (DE); ROHOVEC, Joachim, A-2500 Baden bei Wien (AT); BULAN, Andreas, 40764 Langenfeld (DE); WEIS, Mathias, 51379 Leverkusen (DE)
(74) Vertreter: Münzel, Joachim R.
(86) Internationale Anmeldenummer: PCT/EP2010/003253
(87) Internationale Veröffentlichungsnummer: WO 2010/139425

(56) Entgegenhaltungen:
- EP-A1- 1 120 481
- DE-A1- 10 342 148

## Beschreibung

Die Erfindung betrifft ein Verfahren zur Elektrolyse einer wässerigen Lösung von Chlorwasserstoff oder Alkalichlorid in einer Elektrolysezelle, die ein Anodenhalbelement mit einer Anode, ein Kathodenhalbelement mit einer Gasdiffusionselektrode als Kathode und eine Kationenaustauschermembran zur elektrolytischen Trennung von Anodenhalbelement und Kathodenhalbelement umfasst, wobei dem Kathodenhalbelement ein Sauerstoff enthaltendes Gas zugeführt und überschüssiges, Sauerstoff enthaltendes Gas aus dem Kathodenhalbelement abgeführt wird. Die Erfindung betrifft des Weiteren eine entsprechende Vorrichtung.

Die Elektrolyse von wässrigen Lösungen von Chlorwasserstoff (Salzsäure) und wässrigen Alkalichloridlösungen kann elektrolytisch unter Einsatz einer Gasdiffusionselektrode als Sauerstoffverzehrkathoden erfolgen. Dabei wird in den Kathodenraum der Elektrolysezelle Sauerstoff, Luft oder mit Sauerstoff angereicherte Luft im Überschuss eingespeist. Durch den Einsatz von Sauerstoffverzehrkathoden wird die Elektrolysespannung um ca. 30 % im Vergleich zu herkömmlichen Salzsäure- der Chloralkalielektrolysen gesenkt. Nachfolgend soll das dem Kathodenhalbelement zugeführte sauerstoffreiche Gas, also beispielsweise reiner Sauerstoff, Luft oder mit Sauerstoff angereicherte Luft, auch als Sauerstoff bezeichnet werden, ohne das damit eine Beschränkung der Erfindung verbunden sein soll.

Ein Verfahren zur Elektrolyse von Salzsäure ist beispielsweise aus der US-A 5 770 035 bekannt. Der dort beschriebene Gegenstand weist eine Membran-Elektrolysezelle mit einer Sauerstoffverzehrkathode sowie einen Anodenraum mit einer für die Chlorerzeugung geeigneten Anode auf, die durch eine übliche Kationenaustauschermembran voneinander getrennt sind. Der Anodenraum wird mit Salzsäure gefüllt. An der Anode wird Chlor gebildet, das aufgefangen und aufgearbeitet wird, während der Kathode Luft, sauerstoffreiche Luft oder Sauerstoff zugeführt wird.

Aus der EP-A 1 067 215 ist ein Verfahren zur Elektrolyse einer wässrigen Alkalichloridlösung unter Verwendung einer Sauerstoffverzehrkathode bekannt. Die Elektrolysezelle setzt sich aus einem Anodenhalbelement und einem Kathodenhalbelement zusammen, die durch eine Kationenaustauschermembran voneinander getrennt sind. Das Kathodenhalbelement besteht aus einem Elektrolytraum und einem Gasraum, zwischen denen eine Sauerstoffverzehrkathode angeordnet ist. Der Elektrolytraum ist mit Alkalihydroxidlösung gefüllt. Während der Elektrolyse wird der Gasraum wird Sauerstoff bespeist.

Beim Einsatz von Sauerstoffverzehrkathoden kann es aufgrund von Konkurrenzreaktionen zur Bildung von Wasserstoff kommen. Aus diesem Grunde scheiterte bislang eine Kreislaufführung des im Kathodenhalbelement überschüssigen Sauerstoffs, da beim Rezyklieren die Gefahr besteht, dass sich der im Gasgemisch mit Sauerstoff vorliegende Wasserstoff über die Explosionsgrenze von 4 Vol.-% aufkonzentriert. Das überschüssige Gas wurde daher bisher meist gereinigt und in die Abluft abgegeben.

Um das Problem der Wasserstoffaufkonzentration zu lösen, wird in der DE 103 42 148 A1 vorgeschlagen, dem aus dem Kathodenhalbelement abgeführten sauerstoffreichen Abgas einer katalytischen Oxidation von Wasserstoff zu unterwerfen. Das solcherart behandelte Gas wird anschließend erneut dem Kathodenhalbelement zugeführt. Um stets einen Überschuss an Sauerstoff zur Verfügung zu stellen, wird dem Kathodenhalbelement zusätzlicher Sauerstoff zugeführt. Der frisch zugeführte Sauerstoff wird beispielsweise vor Eintritt in das Kathodenhalbelement mit dem gereinigten Sauerstoffstrom vermischt. Durch die katalytische Reaktion wird der Wasserstoffgehalt merklich verringert und eine mehrfache Rezyklierung des Sauerstoffs ermöglicht. Dieser Gegenstand hat sich bewährt; problematisch ist jedoch, dass sich bei der Kreislaufführung ggf. weitere Gase, wie beispielsweise Argon aufkonzentrieren, die katalytisch nicht entfernt werden können und einen erhöhten Austausch mit frischem Sauerstoff erforderlich machen. Um einen hinreichenden Sauerstoffüberschuss an der Kathode zu gewährleisten, muss zudem möglichst reiner Sauerstoff zugeführt werden, der verhältnismäßig teuer ist.

Die Aufgabe der vorliegenden Erfindung besteht darin, ein alternatives Verfahren zu schaffen, das eine zumindest teilweise Kreislaufführung des im Kathodenhalbelement im Überschuss eingesetzten Sauerstoffs erlaubt.

Gelöst ist dieser Aufgabe bei einem Verfahren der eingangs genannten Art und Zweckbestimmung dadurch, dass das dem Kathodenhalbelement entnommene, Sauerstoff enthaltende Gas zumindest teilweise einer Einrichtung zur Gastrennung zugeführt wird, in dem das Sauerstoff enthaltene Gas in eine sauerstoffreiche und eine sauerstoffarme Fraktion getrennt wird, und die sauerstoffreiche Fraktion anschließend erneut dem Kathodenhalbelement zugeführt wird. In der Einrichtung zur Gastrennung wird das dem Kathodenhalbelement entnommene Gas in an sich bekannter Weise zerlegt. Auf diese Weise kann die Zufuhr von frischem Sauerstoff deutlich reduziert und damit Kosten gesenkt werden. In der sauerstoffreichen Fraktion in der Einrichtung zur Gastrennung fällt ein nur sehr geringer Anteil an Spurengasen wie z.B. Wasserstoff oder Argon an, da diese, ebenso wie etwa vorhandener Stickstoff, in der Einrichtung zur Gastrennung als eine gemeinsame oder mehrere separate Fraktionen abgetrennt wird. Gleichwohl ist es im Rahmen der Erfindung nicht ausgeschlossen, einen zusätzlichen Verfahrensschritt zur - beispielsweise katalytischen - Entfernung von Spurengasen, insbesondere von Wasserstoff oder Argon, vorzusehen.

Als "sauerstoffreiches Gas", das der Sauerstoffverzehrkathode eingangsseitig zugeführt wird, wird dabei bevorzugt ein Gas mit einem Sauerstoffanteil von wenigstens 90 Vol.-% verstanden. Als ein "überschüssigen Sauerstoff' enthaltendes Gas wird hier generell ein Gas verstanden, das einen höheren Sauerstoffanteil als Luft besitzt. Durch den Elektrolyseprozess an der Sauerstoffverzehrkathode wird der Sauerstoffanteil des Gases im Kathodenraum zwar reduziert, jedoch ist der ausgangsseitige Sauerstoffanteil mit beispielsweise 70-85 Vol.-% immer noch weitaus höher als der Sauerstoffanteil in Luft. Dieses überschüssigen Sauerstoff enthaltende Gas wird erfindungsgemäß ganz oder teilweise der Einrichtung zur Gastrennung zugeführt mit dem Ergebnis, dass diese einen entsprechend größeren Mengenstrom an sauerstoffreicher Fraktion erzeugt.

Vorteilhafterweise arbeitet die Einrichtung zur Gastrennung nach einem Membranverfahren, einem Adsorptionsverfahren oder einem kryogenen Gastrennverfahren, wie beispielsweise Luftzerlegung durch Rektifikation. Die Trennverfahren arbeiten bevorzugt so, dass etwaig vorhandene Spuren weiterer Gase, wie Argon oder Wasserstoff, die in dem dem Kathodenhalbelement entnommenen Sauerstoff enthaltenen Gas vorhanden sind, von der sauerstoffreichen Fraktion abgetrennt werden. Auf diese Weise kann das Gas wesentlich öfter rezykliert werden, als dies bei Verfahren nach dem Stande der Technik möglich ist.

Die Aufgabe der Erfindung wird auch gelöst durch eine Vorrichtung zur Elektrolyse einer wässerigen Lösung von Chlorwasserstoff oder Alkalichlorid in einer Elektrolysezelle, die ein Anodenhalbelement mit einer Anode, ein Kathodenhalbelement mit einer Gasdiffusionselektrode als Kathode und eine Kationenaustauschermembran zur elektrolytischen Trennung von Anodenhalbelement und Kathodenhalbelement, einer Sauerstoffzuführung zum Zuführen eines sauerstoffreichen Gases zum Kathodenhalbelement und eine Sauerstoffableitung zum Ableiten von überschüssigem Sauerstoff enthaltendem Gas aus dem Kathodenhalbelement umfasst, und die dadurch gekennzeichnet ist, dass die Sauerstoffableitung mit einer Einrichtung zur Gastrennung in Strömungsverbindung steht, in der das Sauerstoff enthaltene Gas in einer sauerstoffreiche und eine sauerstoffarme Fraktion getrennt wird, wobei die Einrichtung zur Gastrennung eine Ausgangsleitung für die sauerstoffreiche Fraktion umfasst, die mit der Sauerstoffzuführung des Kathodenhalbelements strömungsverbunden ist.

Als bevorzugte Einrichtungen zur Gastrennung kommen insbesondere eine Druckwechseladsorptionsanlage (PSA), eine Vakuumdruckwechseladsorptionsanlage (VPSA) oder eine kryogene Luftzerlegungsanlage (LZA) zum Einsatz. Derartige Einrichtungen sind seit langem bekannt und ermöglichen zuverlässig die Herstellung einer sauerstoffreichen Fraktion aus zugeführter Luft mit einem Sauerstoffanteil zwischen >90 Vol-% (PSA; VPSA) und >99,998 Vol-% bei kryogenen Luftzerlegungsanlagen. Bei der Zuführung eines Gases, das einen gegenüber Luft erhöhten Sauerstoffanteil besitzt, erhöht sich die Reinheit noch und die Wirtschaftlichkeit der Anlagen in Bezug auf die Sauerstoffproduktion wird verbessert.

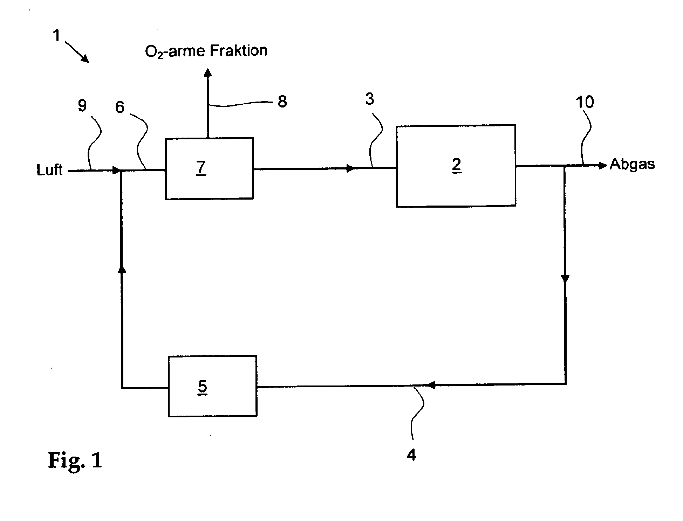

Anhand der Zeichnung soll ein Ausführungsbeispiel der Erfindung näher erläutert werden. In schematischer Ansicht zeigt die einzige Zeichnung (Fig. 1) die Arbeitsweise einer erfindungsgemäßen Anordnung.

Die Anordnung 1 zur Elektrolyse einer wässerigen Lösung von Chlorwasserstoff oder einer wässerigen Alkalichloridlösung umfasst eine Elektrolysezelle, die neben einem hier nicht gezeigten Anodenhalbelement ein Kathodenhalbelement mit einer Sauerstoffverzehrkathode 2 (im Folgenden auch kurz SVK genannt) umfasst. Zum Betrieb der SVK wird ein sauerstoffreiches Gas, beispielsweise Sauerstoff mit einer Reinheit von über 90% über eine Zuleitung 3 zugeführt. Beim Elektrolyseprozess reduziert sich der Sauerstoffanteil des im Gasraum des Kathodenhalbelements vorliegenden Gases auf einen Wert, der immer noch deutlich über dem des Sauerstoffanteils von Luft liegt. Dieses überschüssigen Sauerstoff enthaltende Gas wird in der im Folgenden beschriebenen Weise aufbereitet und im Kreislauf geführt. Dazu wird das überschüssigen Sauerstoff enthaltende Gas über eine Ableitung 4 aus dem Kathodenhalbraum abgeführt. Die Ableitung 4 mündet, ggf. nach Durchlaufen einer katalytischen Trenneinrichtung 5 zum Abtrennen von Wasserstoff, in die Eingangsleitung 6 einer Einrichtung 7 zur Gastrennung. Bei der Einrichtung 7 handelt es sich beispielsweise um eine Adsorptionsanlage vom PSA- oder VPSA - Typ, oder um eine kryogene Luftzerlegungsanlage. Die Einrichtung 7 zur Gastrennung zerlegt den über die Eingangsleitung 6 herangeführten Gasstrom in eine sauerstoffreiche Fraktion und eine oder mehrere sauerstoffarme Fraktion/en, die beispielsweise Stickstoff, Argon oder sonstige Edelgase, Kohlendioxid oder Wasserstoff enthalten. Während die sauerstoffarme Fraktion bzw. die sauerstoffarmen Fraktionen über eine Abgasleitung 8 aus dem Kreislauf entfernt und gegebenenfalls einer anderweitigen Verwertung zugeführt wird bzw. werden, wird die sauerstoffreiche Fraktion in die Zuleitung 3 eingespeist und der SVK erneut 3 zugeführt, womit der Kreislauf geschlossen ist. Über eine Frischgaszuleitung 9 wird ein Sauerstoff enthaltenes Gas, beispielsweise Luft oder reiner Sauerstoff, zugeführt, um den elektrolytisch verbrauchten Sauerstoff zu ersetzen. Eine Abgasleitung 10 dient dazu, bei Bedarf überschüssigen Sauerstoff enthaltenes Gas aus dem Kreislauf auszukoppeln, um beispielsweise einer Anreicherung von Spurengasen im Kreislauf entgegenzuwirken.

Neben der Chlorherstellung kann der Einsatz von Gasdiffusionselektroden als Sauerstoffverzehrkathoden auch in anderen Elektrolytverfahren sonnvoll sein, beispielsweise bei der Herstellung von Wasserstoffperoxid (H₂O₂).

### Beispiel:

Dem Kathodenraum einer Sauerstoffverzehrkathode, die entsprechend der Erfindung in einem Sauerstoffkreislauf mit einer PSA-Anlage zur Gastrennung geschaltet ist, wird eine in der PSA-Anlage abgetrennte sauerstoffreiche Fraktion mit einem Sauerstoffanteil von 93 Vol.-% (1345 kg/h) zugeführt. Durch den Elektrolyseprozess wird der Sauerstoffgehalt des im Kathodenraum vorliegenden Gases auf 85 Vol.-% reduziert. Von diesem Gas wird ein ca. 500 kg/h Sauerstoff enthaltender Mengenstrom abgeführt und mit 940 kg/h O₂ aus Frischluft vermischt. Das entstehende Mischgas mit ca. 28 Vol.-% Sauerstoff (1440 kg/h O₂) wird in der PSA-Anlage in eine sauerstoffarme und eine sauerstoffreiche Fraktion getrennt. Die sauerstoffarme, überwiegend aus Stickstoff bestehende Fraktion mit einem Sauerstoffanteil von ca. 9,0 Vol.-% (95 kg/h O₂) wird abgeführt und nach einer Reinigungsstufe in die Umgebungsluft abgeleitet oder einer anderweitigen Verwertung zugeführt. Um den Wasserstoffgehalt im Kreisgas dauerhaft auf einen Wert deutlich unterhalb der Explosionsgrenze zu haltern, wird an beliebiger Stelle dem Kreislauf weiteres Gas entnommen, dessen Menge in Abhängigkeit vom Wasserstoffgehalt geregelt werden kann. In der Regel genügt dazu ein Anteil von weniger als 8 - 10 % des im Kreislauf geführten Gases, der durch Frischluft oder Sauerstoff zu ersetzen ist. Alternativ oder ergänzend zur Auskopplung eines Teilstroms kann der Wasserstoffanteil auch katalytisch entfernt werden.

### Bezugszeichenliste:

- 1.: Anordnung
- 2.: Sauerstoffverzehrkathode/SVK
- 3.: Zuleitung
- 4.: Ableitung
- 5.: Katalytische Trenneinrichtung
- 6.: Eingangsleitung
- 7.: Einrichtung zur Gastrennung
- 8.: Abgasleitung
- 9.: Frischgaszuleitung
- 10.: Abgasleitung

## Patentansprüche

1. Verfahren zur Elektrolyse einer wässerigen Lösung von Chlorwasserstoff oder Alkalichlorid in einer Elektrolysezelle, die ein Anodenhalbelement mit einer Anode, ein Kathodenhalbelement mit einer Gasdiffusionselektrode (2) als Kathode und eine Kationenaustauschermembran zur elektrolytischen Trennung von Anodenhalbelement und Kathodenhalbelement umfasst, wobei dem Kathodenhalbelement ein Sauerstoff enthaltendes Gas zugeführt und überschüssigen Sauerstoff enthaltendes Gas aus dem Kathodenhalbelement abgeführt wird,
**dadurch gekennzeichnet, dass** das dem Kathodenhalbelement entnommene, überschüssigen Sauerstoff enthaltende Gas zumindest teilweise einer Einrichtung (7) zur Gastrennung zugeführt wird, in dem das überschüssigen Sauerstoff enthaltene Gas in einer sauerstoffreiche und eine sauerstoffarme Fraktion getrennt wird, und die sauerstoffreiche Fraktion anschließend dem Kathodenhalbelement zugeführt wird.

2. Verfahren nach Anspruch 1, **dadurch gekennzeichnet, dass** die Einrichtung (7) zur Gastrennung nach einem Membranverfahren, einem Adsorptionsverfahren oder einem kryogenen Gastrennverfahren arbeitet.

3. Vorrichtung zur Elektrolyse einer wässerigen Lösung von Chlorwasserstoff oder Alkalichlorid in einer Elektrolysezelle, die ein Anodenhalbelement mit einer Anode, ein Kathodenhalbelement mit einer Gasdiffusionselektrode (2) als Kathode und eine Kationenaustauschermembran zur elektrolytischen Trennung von Anodenhalbelement und Kathodenhalbelement, eine Sauerstoffzuführung (3) zum Zuführen eines sauerstoffreichen Gases zum Kathodenhalbelement und eine Sauerstoffableitung (4) zum Ableiten von überschüssigen Sauerstoff enthaltendem Gas aus dem Kathodenhalbelement umfasst,
**dadurch gekennzeichnet, dass** die Sauerstoffableitung (4) mit einer Einrichtung (7) zur Gastrennung in Strömungsverbindung steht, in dem das Sauerstoff enthaltende Gas in eine sauerstoffreiche und eine sauerstoffarme Fraktion getrennt wird, und die Einrichtung (7) zur Gastrennung mit einer Ausgangsleitung für die sauerstoffreiche Fraktion ausgerüstet ist, die mit der Sauerstoffzuführung (3) des Kathodenhalbelements strömungsverbunden ist.

4. Vorrichtung nach Anspruch 3, **dadurch gekennzeichnet, dass** als Einrichtung (7) zur Gastrennung eine Druckwechseladsorptionsanlage (PSA), eine Vakuumdruckwechseladsorptionsanlage (VPSA) oder eine kryogene Luftzerlegungsanlage (LZA) eingesetzt wird.

## Claims

1. Process for the electrolysis of an aqueous solution of hydrogen chloride or alkali metal chloride in an electrolysis cell which comprises an anode half element having an anode, a cathode half element having a gas diffusion electrode (2) as cathode and a cation-exchange membrane for electrolytically separating anode half element and cathode half element, where an oxygen-containing gas is fed to the cathode half element and gas containing excess oxygen is discharged from the cathode half element, **characterized in that** the gas containing excess oxygen taken off from the cathode half element is at least partly fed to a gas separation apparatus (7) in which the gas containing excess oxygen is separated into an oxygen-rich fraction and a low-oxygen fraction and the oxygen-rich fraction is subsequently fed to the cathode half element.

2. Process according to Claim 1, **characterized in that** the gas separation apparatus (7) operates according to a membrane process, an adsorption process or a cryogenic gas separation process.

3. Apparatus for the electrolysis of an aqueous solution of hydrogen chloride or alkali metal chloride in an electrolysis cell which comprises an anode half element having an anode, a cathode half element having a gas diffusion electrode (2) as cathode and a cation-exchange membrane for electrolytically separating anode half element and cathode half element, an oxygen inlet (3) for feeding an oxygen-rich gas to the cathode half element and an oxygen outlet (4) for discharging gas containing excess oxygen from the cathode half element,
**characterized in that** the oxygen outlet (4) is connected so as to allow flow to a gas separation apparatus (7) in which the oxygen-containing gas is separated into an oxygen-rich fraction and a low-oxygen fraction and the gas separation apparatus (7) is equipped with an outlet line for the oxygen-rich fraction which is connected so as to allow flow to the oxygen inlet (3) of the cathode half element.

4. Apparatus according to Claim 3, **characterized in that** a pressure swing adsorption plant (PSAP), a vacuum pressure swing adsorption plant (VPSAP) or a cryogenic air fractionation plant (CAFP) is used as gas separation apparatus (7).

## Revendications

1. Procédé d'électrolyse d'une solution aqueuse de chlorure d'hydrogène ou d'un chlorure alcalin dans une cellule d'électrolyse, qui comprend un demi-élément anodique comprenant une anode, un demi-élément cathodique comprenant une électrode à diffusion de gaz (2) en tant que cathode et une membrane d'échange de cations pour la séparation électrolytique du demi-élément anodique et du demi-élément cathodique, un gaz contenant de l'oxygène étant introduit dans le demi-élément cathodique et un gaz contenant de l'oxygène en excès étant déchargé du demi-élément cathodique, **caractérisé en ce que** le gaz contenant de l'oxygène en excès déchargé du demi-élément cathodique est introduit au moins en partie dans un dispositif (7) pour la séparation du gaz, dans lequel le gaz contenant de l'oxygène en excès est séparé en une fraction riche en oxygène et une fraction pauvre en oxygène, puis la fraction riche en oxygène est introduite dans le demi-élément cathodique.

2. Procédé selon la revendication 1, **caractérisé en ce que** le dispositif (7) pour la séparation du gaz fonctionne par un procédé à membrane, un procédé d'adsorption ou un procédé de séparation de gaz cryogénique.

3. Dispositif pour l'électrolyse d'une solution aqueuse de chlorure d'hydrogène ou d'un chlorure alcalin dans une cellule d'électrolyse, qui comprend un demi-élément anodique comprenant une anode, un demi-élément cathodique comprenant une électrode à diffusion de gaz (2) en tant que cathode et une membrane d'échange de cations pour la séparation électrolytique du demi-élément anodique et du demi-élément cathodique, une entrée d'oxygène (3) pour l'introduction d'un gaz riche en oxygène dans le demi-élément cathodique et une sortie d'oxygène (4) pour le déchargement d'un gaz contenant de l'oxygène en excès du demi-élément cathodique,
**caractérisé en ce que** la sortie d'oxygène (4) présente une connexion fluidique avec un dispositif (7) pour la séparation de gaz, dans lequel le gaz contenant de l'oxygène est séparé en une fraction riche en oxygène et une fraction pauvre en oxygène, et le dispositif (7) pour la séparation de gaz est muni d'une conduite de sortie pour la fraction riche en oxygène, qui présente une connexion fluidique avec l'entrée d'oxygène (3) du demi-élément cathodique.

4. Dispositif selon la revendication 3, **caractérisé en ce qu'**une unité d'adsorption modulée en pression (PSA), une unité d'adsorption modulée en pression sous vide (VPSA) ou une unité de séparation d'air cryogénique (LZA) est utilisée en tant que dispositif (7) pour la séparation de gaz.
